(19) Europäisches Patentamt
European Patent Office
Office européen des brevets

(11) Publication number: 0 018 341
B1

# (12) EUROPEAN PATENT SPECIFICATION

(45) Date of publication of patent specification: 12.01.83

(51) Int. Cl.³: A 01 N 3/00

(21) Application number: 80850062.3

(22) Date of filing: 22.04.80

## (54) A method and composition for the preservation of plants.

(30) Priority: 23.04.79 SE 7903513

(43) Date of publication of application:
29.10.80 Bulletin 80/22

(45) Publication of the grant of the patent:
12.01.83 Bulletin 83/2

(84) Designated Contracting States:
AT BE CH DE FR GB IT LI LU NL SE

(56) References cited:
DE - C - 98 681
DE - C - 115 447
DE - C - 511 066
FR - A - 2 160 310
US - A - 3 895 140

(73) Proprietor: Nordh, Sven Börje Lennart
P.O. Box 615
S-260 35 Ödäkra (SE)

(73) Proprietor: Svensson, Bror Bertil
Smedstorpsvägen 7
S-702 30 Örebro (SE)

(72) Inventor: Nordh, Sven Börje Lennart
P.O. Box 615
S-260 35 Ödäkra (SE)
Inventor: Svensson, Bror Bertil
Smedstorpsvägen 7
S-702 30 Örebro (SE)

(74) Representative: Wallin, Bo-Göran et al,
AWAPATENT AB Box 5117
S-200 71 Malmö (SE)

EP 0 018 341 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# A method and composition for the preservation of plants

The present invention relates to a method and a composition for the preservation of living plants, that is to say convert a living plant to the dead state without changing, to any appreciable extent, the natural appearance or character of the plant. The invention is particularly, but not exclusively, intended for coniferous plants with the exception of the Picea, Abies, Tsuga, Larix, Taxus and Cedrus genuses.

It is known from, for example, French patent specifications 1,105,091 and 2,160,310, German patent specification 213,877, German Offenlegungsschrift 1,542,903 and the publication "Garden Flowers", Compton, J., Stockholm 1970, pp. 148 and 149, to use mixtures of glycerin and water for preserving plants, that is to say to arrest the dissolution of the plant cells (and thereby the plant) into other component parts after the death of the plant. Even though it has been possible to realize a certain preservation and retain a certain natural appearance in plants by means of these prior art processes, preservation has, nevertheless, been far too limited and restricted to warrant the introduction of industrial manufacture. Moreover, in most cases the natural resilience and flexibility of the plants has been partly lost. In the prior art preservation processes, it is normal to use approximately one part by volume of glycerin in a mixture with approximately two parts by volume of water, the solution being as a rule heated somewhat to obtain optimum mixture. In order that the best possible preservation in prior art processes be obtained, the preservation must be carried out during the summer while the sap is still rising in the plants. In these prior art processes, treatment times usually amount to about two weeks, an unrealistically long period of time even if the very restricted and incomplete preservation of the plants could in itself be accepted.

Furthermore, attempts have been made to increase the life of plants by spraying them with a preparation which deposits an air-permeable membrane on the plant. However, such attempts have fallen foul of the three following shortcomings: it is as good as impossible completely to cover every needle on, for example, a Juniper plant; the areas of the plant beneath the air-permeable membrane will sooner or later dry out and the resultant appearance will be completely different as compared to the living plant; and as a rule a degradation process sets in the cell matter of the plants.

The only hitherto known process of realizing complete preservation is the classical drying of plants, but this drying operation may be applied only to certain flowers, and, moreover, the character of the plant will be altered.

In the above-mentioned preservation process in which glycerin and water is used, dyestuffs have sometimes been added to the solution in order to replace the natural color of the plants after preservation (please see for example FR—PS 1,174,603 and DE—PS 411,406). However, it has proved to be difficult to cause the preservation mixture, and thereby the dyestuffs, to penetrate out into the shoot tips, and substantially completely fill out all of the plant cells in leaves and needles. This factor is particularly manifest as regards coniferous plants such as the Juniperus, Pinus, Chameacyparis, Cupressus and Thuja genuses, as well as evergreen plants such as Hedera helix (ivy), Prunus laurocerasus (cherry laurel) and Ilex aquifolium (holly).

It has now surprisingly proved that, in the prior art preservation process based on glycerin, water and dyestuffs, it is possible to realize, on the one hand, an industrially acceptable production process, and, on the other hand, such a good preservation of the plants that they, from the practical point of view, may be considered as indefinitely non-perishable, the natural properties of the plants being appreciably unchanged, if, in the dyestuff mixture, there is admixed a special, yellow dye stuff called tartrazine (E102, C.I. 19140) at a high content and, preferably, also a water-soluble potassium salt, and if this preparation is, moreover, carried out at suitable climatic conditions. It is possible, by the present invention, to realize such a total treatment of the plants right out to the outermost leaf or needle tips that the plants will retain their natural appearance and natural properties for a very long period of time.

Thus, the present invention relates to a method for preserving living plants, in particular coniferous plants apart from the Picea, Abies, Tsuga, Larix, Taxus and Cedrus genuses, in which method the plants, after cutting-off the root, are caused to suck up, through a debarked stem portion, a preservative liquid which is based on glycerin and water in the approximate volume proportions of 18:82 to 35:65 and contains colorants or dyestuffs for replacing the color of the plants after the preservation, and preferably also one or more plant nutrients, in particular at least one water-soluble potassium salt, the plants being dried after the preservation. In the method according to the present invention, the preservation is carried out at an air temperature of from 15—33°C in circulating air at a relative humidity of at most 60%, the preservation liquid being kept at a temperature of from 15—33°C.

The characterizing feature of the present invention is that the preservative liquid is caused to contain apart from a blue and possibly also a red dyestuff, tartrazine (C.I. 19140, E102) in a concentration of at least 2 g/l preservative liquid.

In a further development of the invention, it has proved to be advantageous to add, to the preservative liquid, an amphoteric, sulfonated surface active agent, preferably an agent marketed under the trade mark MIRANOL and available from Miranol Chemical Company, USA. These surface tension active agents comprise a group of substances which are all based on the structural formula

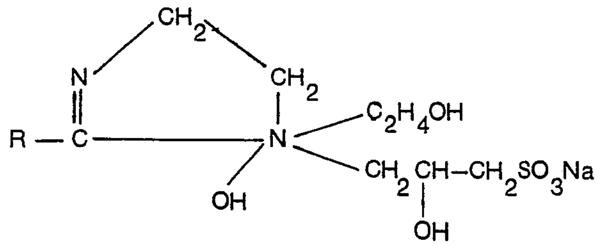

By the addition of such a surface active agent, it is possible to realize a differentiated coloring of the preserved plant such that a lighter color tone is imparted to younger shoots than to older. The result will be a prepared, preserved plant which gives a more living impression from the point of view of coloring.

In a further development of the invention, it has proved to be advantageous, in particular in the preservation or preparation of foliate plants, to adjust the pH and nutrient content of the preservative solution in dependence on the type of plant which is to be prepared. The reason for this is that it is necessary to maintain intact the liquid transport vessels of the rootless plant or plant stock for that period of time, normally from 5—7 days, which is necessary to prepare or preserve the plant. Thus, the best preparation or preservation results have been obtained if the pH is kept at the same pH as that of the cell liquid of the plant type in question, with a deviation of preferably at most $\pm 0.5$ pH units. As example, it might be mentioned that the cell sap of calcifugous plants often has a pH of approximately 4.0 and the most reliable results will then be obtained at a pH of from 3.5 to 4.5 of the preparation or preservation liquid. This requires a checking of the plant stock intended for preparation, since the pH of the cell sap can vary not only from plant type to plant type but also from cultivation site to cultivation site for one and the same plant type. The same is valid as regards the concentration of micro and macro substances in the preparation or preservation liquid, expressed as the conductivity of the liquid. As regards the pH, it has proved that greater deviations than $\pm 0.5$ pH units lead to a poorer absorption capacity and consequently to more brittle plants.

Thus, it has proved that the two factors: pH and conductivity of the cell sap in the plant type subject to preservation are of importance not only for the plant's acceptance of the preservative liquid but also for uniformity in the resultant color of a finally prepared or preserved plant. This would seem to be remarkable, since the absorption by suction of the preservative liquid into the plant is an unnatural process because the suction does not take place via the root system but directly via a debarked trunk portion.

The method according to the present invention has been utilized for a long series of plants, of the genuses Thuja, Pinus, Juniperus, Quercus, Fagus, Ilex, Chamaecyparis, Cupressus, Prunus, Hedera, Elaeagnus and Mahonia. As examples of particular plants which have been tested and yielded very good results, mention may be made of the following:

| | |
|---|---|
| Northern white cedar | Thuja occidentalis var. Columnea |
| Arborvitae | Thuja occidentalis var. Holmstrupii |
| Western red cedar | Thuja plicata |
| Pine | Pinus silvestris |
| Chinese juniper | Juniperus chinensis var. Hetzii |
| Common juniper | Juniperus communis |
| Savin | Juniperuis sabina |
| English oak | Quercus robur var. Fastigiata |
| Beech | Fagus silvatica |
| Copper beech | Fagus silvatica var. artopurpurea |
| Weeping beech | Fagus silvatica var. pendula |
| Holly | Ilex aquifolium |

| | |
|---|---|
| Lawson cypress | Chamaecyparis lawsoniana var. Alumii |
| True cypress | Cupressus arizonica |
| Cherry laurel | Prunus laurocerasus |
| Ivy | Hedera helix |
| Silverberry | Elaeagnus ebbingie |
| Oregon grape | Mahonia aquifolium |
| Coffee plant | Coffea arabica |
| Hibiscus | Hibiscus roa-sirensis |
| Orange | Citrus sinensis |
| Myrtle | Mirtus communis |
| Eucalyptus | Eucaluptus cinera<br>Eucaluptus polyarthemus |

As in the prior preservation processes, glycerin will, in the method according to the present invention, replace the water in the cell sap as regards filler and turgor. The difference between the prior art processes and that according to the present invention resides in the fact that the special yellow dyestuff tartrazine at the disclosed high content and the possible potassium salt, together with other preparation conditions have resulted in a considerably more complete filling-out of the plant. As a result, the plant will be just as soft and flexible as a living plant, even though the preserved plant is in actual fact dead. It is assumed that the tartrazine, in some manner which has not been examined influences the capacity of the plants to suck up the preservative solution so that this is rapidly and effectively drawn up right out to the tips of the shoots which otherwise would remain untreated and would be destroyed. In the use of the potassium salt, in particular potassium nitrate, this high absorption capacity is further increased in a number of plants. Potassium nitrate is the preferred water-soluble potassium compound and is suitably used in a concentration of 1—15 g/l, but potassium chloride and potassium sulfate may also be used, albeit with not such good results.

If too small an amount of tartrazine is used in the colorant mixture, the result will be an incomplete preservation of the plant, whereas too high a content of tartrazine gives an incorrect and far too yellow color. In the former case the result will be a poorly preserved plant which displays poor durability and an unsightly appearance (that is to say the plant will display many brownish plant cells without preservative solution). In the latter case, a correctly preserved plant is obtained, but the appearance of the plant will be unacceptable from the commercial point of view in which the natural color is a prime factor.

The amount of blue dyestuff should be adapted to the amount of tartrazine in the preservative solution, such that a green color which is suitable for the plant in question will be obtained. In the use of patent blue V (C.I. 42051, E131) the content should be most preferably from 0.1 to 0.8 g/l. Too low or too high a content will result in commercially unacceptable yellowish or bluish preserved plants. In a corresponding manner, the possible content of red dyestuff, preferably new coccine (C.I. 16255, E124) should be adapted to the contents of the yellow and blue dyestuffs such that there will be obtained the sought-for reddish green color in the preserved plants. New coccine has the advantage that it aids the tartrazine in its effect of imparting to the plant a tendency powerfully to suck up the preservative solution, such that the solution will penetrate, to an extremely high level, right out into the shoot tips of the plant. New coccine may suitably be used in a content of from 1 to 20 g/l of the preservative solution.

The proportions of water to glycerin in the preservative solution are of great importance and too high a glycerin content will render the solution far too viscous and heavy for the plant to be able to draw up the solution right out into the shoot tips. Too high a water content will, granted, entail a complete absorption of the preservative solution in the plant, but the turgor pressure will be far too low, that is to say the needles/leaves and branches of the plants will be considerably thinner than in the living state and will, moreover, be extremely brittle.

The temperature in the preservation process is also of great importance, and an air temperature of below +15°C entails that the aspiration of the plant will be too low and that the sucking-up of the preservative liquid will be incomplete even if the treatment time were to be extended to, for example, 20 days. Too high a temperature, above 33°C, results in far too rapid a metabolism and the plant will

die after about 2,5 days, with the result that the plant is incompletely preserved. The same is valid for the temperature of the preservative liquid which may vary between the above-mentioned limits. However, the preferred air temperature is +25°C, whereas the liquid temperature is suitably +28°C, since the cell aspiration of the plant will hereby commence rapidly in the preservation cycle. In order to maintain the aspiration of the plant and, consequently, the absorption of the preservative liquid, the preservation should be carried out in circulating air, the air flow velocity being preferably from 0.5 to 1 m/s past the plants partially immersed in the preservative solution. By constantly drying the flowing air, or by adding heated cold air drawn in from outside, it is possible to maintain the relative humidity of the air at the requisite low level of at most 60%. As a result of the low relative humidity, evaporation from the plant increases with a resultant increase in the taking up by suction of the preservative liquid.

In order to obtain a rapid commencement of the sucking-up of the preservation liquid and in order to ensure that the preservative liquid is, with all the reliability sucked right up to the shoot tips, it is advantageous if the plants, prior to immersion in the preservative liquid are stored in the premises where the preservation method is to be carried out, for up to one day before being placed in the preservative solution. In this treatment, the plants will, thus, be conditioned to substantially the same light, temperature, air flow and air humidity conditions as in the subsequent preservation method. As a result, a certain temporary wilting of the plant will be realized, such that the saline content in the plant increases, whereby an increase in the osmotic pressure will be obtained such that the sucking-up of the preservative solution takes place at extra high speed at the beginning of the preservation cycle.

In the preservation of plants during the winter when the plants are cold and a number of plants are quiescent, it is necessary, prior to the preservation, to warm and/or "wake" them. This may be effected by prewarming the plants in 100% relative humidity at approximately +30°C for about 1 day before the plants are suspended in the premises in which the preservation takes place.

In the method according to the invention, it is preferred if the preservation is carried out under the exclusion of solar light and light form a blue sky, preferably in complete darkness or in light from a cloudy sky.

The preservation period, that is to say the time from the immersion of the plants in the preservative liquid up to their complete preservation, is as a rule about five days but may be somewhat longer in dependence upon the type of plant being preserved. However, it is easy exactly to ascertain the requisite preservation time for the different plant types involved. After the preservation, the plants are lifted up out of the preservative liquid and are then allowed to dry under the same climatic conditions as during the preservation cycle itself. This drying may require about five days or slightly longer. The drying operation is required in order that the natural form of the plant be retained, for, if the plants were to be packed while still damp and before they have dried, they may dry during their transport to consumers and then assume the deformed shape which the plants have while they are packed. Hence, it is essential that the major fraction of the water in the sucked-up preservative liquid be dried off.

Naturally, it is important if a satisfactory treatment result is to be attained, that a new incision be made in the plant and that the plant, in immediate conjunction therewith, be immersed in the preservative solution so that this may freely be absorbed within all parts of the sap-transporting stem.

As was mentioned above, it is possible to obtain a shaded or differentiated coloring of the younger and older portions of coniferous plants by adding, to the preparation or preservation solution, an amphoteric, sulfonated surface active agent. Experiments have shown that the content of such an agent may lie within the range of from 0.2—1.5 vol-%, calculated on the preparation liquid. A particularly preferred surface active agent is MIRANOL JEM CONC. which is an amphoteric surface active agent in the form of a dicarboxylated imidazoline derivative with caprylic and ethylhexoic radicals and which may be purchased from Miranol Chemical Company, USA.

On the addition of an amphoteric surface active agent for obtaining a shaded coloring, the surface active agent should be added 5—6 hours after the coniferous plant has been introduced into the solution in order to be preserved or prepared. Since the substances in question have a surface tension reducing effect, the dose should be the above-disclosed, since higher and lower contents proved to give poorer results because of a lowered suction capacity on the part of the plant.

Mention has also been made above that at least one water-soluble potassium salt is preferably admixed to the preparation solution, this salt serving as a nutrient. However, it is possible to make use of other nutrient substances in order to impart to the preservative solution a suitable conductivity. Here, it has proved most suitable to add, to the preservation solution, the same nutrient substances as the plant needs in the live state. The total concentration of both macro and micro nutrient substances must not, however, exceed the conductivity of the cell sap of the plant subjected to preparation to such an extent that a toxic action occurs. In a practical embodiment, it has proved that the selection of conductivity for the nutrient substance concentration in the preparation solution may be determined by determining the conductivity of the cell liquid in plant specimens selected in that portion of plants which is to be prepared and emanating from one and the same cultivation site. If optimum yield is to be obtained in the preservation or preparation of the plants, it is not possible without further ado to make use of the same conductivity for, for example a Prunus which has been cultivated in Holland and a Prunus which has been cultivated in Denmark. However, it is not possible to disclose specific

conductivity or pH for each particular type of plant, it being necessary to arrange experiments from case to case. Nevertheless, that which is of importance is the discovery that these factors may also have an influence on the otherwise excellent result when tartrazine is included in the preservation solution. The conductivity of the preservation solution can be corrected with the assistance of a fluid plant nutrient, good results having been achieved with the nutrient SUPERBA purchased from Supra AB, Norrköping, Sweden which, according to the manufacturer's specification, has a pH of 2.4 and has the following composition:

| | |
|---|---|
| Nitrogen (N) | 4.0 weight-% nitrate + 2.5 weight-% ammonia |
| Potassium (K) | 4.75 weight-% |
| Phosphorous (P) | 1.0 weight-% |
| Sulphur (S) | 0.5 weight-% |
| Magnesium (Mg) | 0.6 weight-% |
| Iron (Fe) | 0.025 weight-% |
| Manganese (Mn) | 0.01 weight-% |
| Copper (Cu) | 0.01 weight-% |
| Zinc (Zn) | 0.005 weight-% |
| Boron (B) | 0.0025 weight-% |
| Molybdenum (Mo) | 0.008 weight-% |
| Cobalt (Co) | 0.003 weight-% |

When this nutrient solution was added to the preservative solution, the $KNO_3$ mentioned in the following description was dispensed with in the mixtures for different coniferous plants.

For the preservation of Hedera, Prunus, Elaeagnus, Ilex and Mahonia genuses and other leaf plants, and the Cupressus and Thuja genuses, the following preservative solution (No. 1) is particularly suitable.

| | |
|---|---|
| Water | 6400 ml |
| glycerin (1.23 g/cm$^3$) | 1600 ml |
| green domestic colorant* | 800 ml |
| tartrazine | 40 g |
| 3% silver nitrate aqueous solution | 16 ml |
| $KNO_3$ | 40 g |

*Made by Saturnus and consisting of 1.22 weight-% tartrazine (C.I. 19140, E102), 0.61 weight-% patent blue V (C.I. 42051, E131), the remainder being water.
Solution No. 1 contains, thus, in total approximately 5.6 g/l of tartrazine, approximately 0.55 g/l of patent blue V and approximately 4.5 g/l $KNO_3$.

For the preservation of yellow-green Juniperus genuses (for example Juniperus sabina and Juniperus chinensis pfitzeriana) and other yellow-green coniferous plants, the following preservative solution (No. 2) is particularly suitable:

| | |
|---|---|
| Water | 6400 ml |
| glycerin (1.23 g/cm$^3$) | 1600 ml |
| green domestic colorant* | 300 ml |
| tartrazine | 16 g |
| 3% silver nitrate aqueous solution | 16 ml |
| $KNO_3$ | — |

* Made by Saturnus

Thus, solution 2 contains in total approximately 2.36 g/l of tartrazine and approximately 0.22 g/l of patent blue V.

For the preservation of Thuja, Chamaecyparis, and Juniperus genuses, the following preservative solution (No. 3) is particularly suitable:

| | |
|---|---|
| Water | 6400 ml |
| glycerin (1.23 g/cm$^3$) | 1600 ml |
| green domestic colorant* | 300 ml |
| tartrazine | 16 g |
| 3% silver nitrate aqueous solution | 16 ml |
| $KNO_3$ | 40 g |

*Made by Saturnus

Thus, solution No. 3 contains approximately 2.35 g/l of tartrazine, approximately 0.21 g/l of patent blue V and approximately 4.8 g/l of $KNO_3$.

Instead of the green domestic colorant purchased from Saturnus, it is possible to use other green domestic colorants which are based on tartrazine and patent blue V, for example of Ekström manufacture, as is apparent from the following Example 1.

For realizing a reddish-green color or purple color in the treated plant, it is possible also to admix to the preservative liquid a cetain amount of the red dyestuff new coccine (E124), which is apparent from the following Example 3.

The present invention will be described in greater detail below in association with a few particular Examples.

Example 1

In this Example, a solution was prepared which consisted of 20 parts by volume of pure glycerin and 80 parts by volume of distilled water. To this solution was added 50 ml/l (0.55 g/l) of green food colorant of the Ekström manufacture. This food colorant consisted of 6 g/l food dyestuff E131 patent blue V and 10.9 g/l of food dyestuff E102 tartrazine, the remainder being water. To this solution of glycerin and water was added in addition, 3.6 g/l of extra tartrazine. Thus, the solution contained approximately 4.15 g/l of tartrazine and 0.3 g/l of patent blue V. The solution was also caused to contain 15 g/l of potassium nitrate and 1 ml/l of 3% $AgNO_3$ aqueous solution as a fungicide which was to prevent fungus attack on the preservative solution. After the preparation, the solution was kept in an open vessel in air for at least five days for oxygenation.

A Lawson cypress (Chamaecyparis lawsoniana var. Alumii) was sawn off at its root and suspended in the treatment premises in which the air temperature was 25°C and the air humidity was kept as low as possible, in any event below 60%. The air in the premises was changed constantly — twice per hour, and the air intake was effected over hot pipes for heating the cold outdoor air. Fans in the premises produced an air draft of 0.5—1.0 m/s past the plant which was to be preserved. After one day, approximately 10cm of the bark around the stem at the root end was removed in order that the preservative solution be kept pure. Thereafter, a new incision surface was sawn approximately 2 cm from the earlier incision surface. Before the new incision surface had had time to be 1 min old, the lower barked end of the plant was immersed into the solution which was kept in a vessel in which the temperature of the solution was held at +28°C by means of an immersion heater. After five days in the solution, the plant was dead and completely treated with the preservative solution, the plant being an

attractive grey green color right out into all of the shoot tips. After these five days, the Lawson cypress was lifted up out of the preservative solution and allowed to hang in the treatment premises for a further five days in order to dry. After the drying, the plant could be kept for a very long time in indoor premises without displaying any visible signs of destruction. The cell content in the entire plant had, thus, been replaced by dyestuff and glycerin. Since the glycerin cannot evaporate and since it replaces the water in the cell sap of the plants as regards filler and turgor, the plant remained as soft and flexible as it had been when alive. The tartrazine and patent blue V resulted together in an attractive green color which replaced the green chlorophyll which had lost its green color on being mixed with glycerin in the plant cells. After some time the Lawson cypress was moved outdoors for the purposes of ascertaining the durability of the treatment in an outdoor climate. In these outdoor conditions, it proved that the glycerin in the cells attracted far too much moisture from the ambient air so that the entire exterior of the plant became damp. In these damp conditions, mold fungi began to grow, and after approximately four months, the plant had suffered complete degradation. Thus, the preserved plant may only be placed indoors in a reasonably moisture-free environment.

Example 2

A 1.5 m high thuja (Thuja occidentalis var. Columnea) was sawn off at ground level and transported into the treatment premises. The bark was peeled off at the lower decimeter of the stem, that is to say that region of the stem which was to be immersed in the preservative solution. Within approximately 1 min after a new saw cut having been made, the barked section of the plant was lowered into a clean vessel which contained a solution of 200 ml pure glycerin and 800 ml distilled water, this solution having been mixed with 2.2 g/l of tartrazine, 1 ml/l of 3% $AgNO_3$ aqueous solution, 15 g/l of potassium nitrate and 0.3 g/l of patent blue V. The treatment premises were held at 25°C air temperature and the solution was maintained at a temperature of +28°C by means of an immersion heater in order that the cell aspiration of the plant should rapidly increase. As in Example 1, an air flow past the plant of 1 m/s was maintained, the air in the premises being changed twice an hour in order to maintain the relative humidity of the air at a low level and, in any event below 60%. After 5 days in the treatment premises, the plant was dead and completely treated, displaying an attractive green color right out into all of the shoot tips. After the treatment, the plant was lifted out of the solution and kept in the same climatic conditions for a further five days in order to dry so that it could retain its natural appearance. In this instance, the entire cell content of the plant had been replaced by color and glycerin, the proportions being such that the plant possessed its natural green color.

Comparative Example 1

Example 2 was repeated but the air temperature was lowered to 13°C. After 14 days with the root end immersed in the preservative liquid, the plant was dead and no longer drew up any preservative solution. However, the plant was but half-treated, counting from the stem and outwardly towards the outermost shoot tips of the branches. The outer regions of all shoots were dried out and, thus, the aspiration of the plant had been far too low.

Comparative Example 2

Example 2 was repeated but the air temperature was maintained at 35°C. As early as after 4 days, the plant had died and no longer drew up any solution. The plant was but half-treated, counting from the stem, and the outer regions of all shoots had dried out. In this case, the aspiration of the plant had been far too vigorous before the plant had been able to suck up the solution right out into the shoot tips.

Comparative Example 3

Example 2 was repeated with the exception that the tartrazine content in the preservative solution was lowered to 0.22 g/l. After 12 days, the plant was dead and no longer drew up any solution. All parts of the plant apart from the cuticula (= the outermost layer of the outer skin) and the epidermis (= the outer skin) were treated and the plant was, therefore, brown and not green as it should have been.

Comparative Example 4

Example 2 was repeated, but in this case, the tartrazine content in the preservative solution was 12 g/l. After 5 days, the plant had died and no longer drew up any solution. The plant was fully treated right out into the shoot tips, but the plant was yellow instead of green. The plant displayed a high level of durability but was not usable from the commercial point of view if the natural green color is to be approximated.

Comparative Example 5

Example 2 was repeated, but in this case the tartrazine content in the preservative solution was 12 g/l and patent blue V had been completely excluded. After 5 days, the plant had died and no longer drew up any solution. The plant was fully treated right out into the shoot tips, but the plant was bright

yellow instead of green. The plant displayed a high level of durability but was not usable from the commercial point of view if the natural green color is to be approximated.

Comparative Example 6

Example 2 was repeated with the exception that the preservative solution was composed of 400 ml of glycerin and 600 ml of distilled water. To this solution were then added the remaining component parts in the amounts disclosed in Example 2. After 12 days, the plant was dead and no longer drew up any solution. The plant proved to be but half-treated, counting from the stem. The outer regions of all shoots were dried-out and this probably depended upon the fact that the solution was far too viscous and heavy for the plant to be able to draw the solution right out to its shoot tips.

Comparative Example 7

Example 2 was repeated with the exception that the solution was composed of 100 ml of glycerin and 900 ml of distilled water, the remaining components in the preservative solution being added in the same amounts as in Example 2. After 5 days, the plant was dead and no longer drew up any solution. The plant was fully treated and green but possessed but half turgor, that is to say the leaves/needles and branches were half as thick as in the live state, and they were, moreover, very brittle.

Comparative Example 8

Example 2 was repeated with the exception that the tartrazine dyestuff had been replaced by the basic yellow zero dye Chrysoidine in an amount of 3 g/l. After 12 days, the plant was dead and no longer drew up any solution. The plant was but partially treated, and the outer regions of all shoots were dried-out.

Example 3

Example 2 was repeated, but in this case 15 g/l of the red dyestuff new coccine (E124, C.I. 16255) was also added to the preservative solution and the potassium nitrate content was but 2 g/l. This solution was subsequently used for the preservation of copper beech (Fagus silvatica var. artropurpurea). After 5 days, the plant had died and no long drew up any solution. The plant was fully treated right out into the shoot tips and had approximately the normal red-green color. The plant displayed a very high level of durability.

Example 4

Example 2 was repeated for the treatment of holly (Ilex aquifolium) instead of thuja. Like the thuja in Example 2, the holly proved to be completely treated and displayed a very high level of durability.

Example 5

Example 2 was repeated with the exception that the content of patent blue V in the preservative solution was 0.25 g/l and the potassium nitrate content was 2 g/l and that the thuja had been replaced by an English oak (Quercus robur var. fastigiata). After 5 days in the treatment premises, the plant was dead and completely treated, displaying an attractive green color right out into the shoot tips. After a drying period of a further 5 days, the English oak was fully treated and it displayed a very high level of durability.

Example 6

Example 2 was repeated, although the above-disclosed solution No. 1 was utilized in the preservation. The following plants were treated and could be preserved with excellent results:

| | |
|---|---|
| Arborvitae | Thuja orientalis aurea |
| true cypress | Cupressus arizonica |
| holly | Ilex aquifolium Want Toll |
| silverberry | Elaeagnus ebbingie |
| ivy | Hedera helix hibernica |
| oregon grape | Mahonia aquifolium |

| | |
|---|---|
| cherry laurel | Prunus laurocerasus var. |
| | rotondifolia |
| | Reynvania |
| | Caucasica |
| | Biletter |
| | Shipkaensis |
| | Makrophylla |
| | van Nes |
| | Otto Leuken |
| | Miseheana |

Moreover, preservation was carried out, under the same conditions and with the same solution, of a cross-breed of aralia and ivy Fatshedera), this plant having, moreover, been grafted with ivy (Hedera) at the top. This complicated plant was also preserved in a manner which was fully satisfactory for commercial purposes.

Example 7

Example 2 was repeated, with the exception, however, that the above-disclosed solution No. 2 was utilized in the preservation. The following plants were treated and could be preserved with excellent results.

Chinese juniper Juniperus chinensis var. Pfitzeriana
Chinese juniper Juniperus chinensis var. Pfitzeriana, aurea
Chinese juniper Juniperus chinensis var. Pfitzeriana, hetzii
Chinese juniper Juniperus chinensis var. Pfitzeriana, Old Gold
Savin Juniperus sabina

Example 8

Example 2 was repeated, with the exception, however, that the above-disclosed solution No. 3 was utilized in the preservation. The following plants were treated and could be preserved with excellent results:

Thuja occidentalis var. Emeraude

Thuja occidentalis var. Smaragd

Thuja occidentalis var. Holmstrupii

Thuja occidentalis var. Little Champion

Thuja occidentalis var. pyramidalis compacta

Thuja occidentalis var. Woodwardii

Thuja plicata atrovirens

Thuja plicata zebrina

Juniperus communis

Juniperus communis Suecica

Juniperus squamata Blue Star

Juniperus squamata Meyeri

Chamaecyparies Lawsoniana var. Lanei

Stewartii

Ellwoodii

Delmore

Erecta viridis

Golden King

Golden Wonder

Stardust

Tilgate

Maas

Pottenei

Tharandtensis Caesia

Alumii Gold

Golden Trihent

Columnaris glauca

Silver Queen

White Spot

Glauca Speek

Lumi

Fletcherii

Backhausiana

Chamaecyparis Lawsoniana var. Pemberi Blue

Green Hedgar

Wisselii

Blue Surprise

Ellwoods Gold

Elegans

Andeleynis

Smithii

Drummondii

Chamaecyparis Lawsoniana var. Witzeliana

Alumii magnifica

Westermanii

Trioms van Boskoop

Silver Gem

Example 9

Example 2 was repeated with a cherry laurel (Prunus laurocerasus shipkaensis), the following recipe for the solution being, however, utilized, and the pH of the solution being adjusted to pH 5.2 by means of 10% sulphuric acid. The conductivity of this solution was approx. 1.6 S when distilled water was used as starting material as regards water. For an analysis of the cell sap of the plant specimen subjected to preparation showed that the cell liquid displayed this pH and conductivity. The recipe for the preparation solution was as follows:

| | |
|---|---|
| Distilled water | 14000 ml |
| Glycerin, spec. weight 1.23 | 6000 ml |
| Sodium phosphate | 17 g |
| Potassium nitrate ($KNO_3$) | 40 g |
| Magnesium sulphate (99.5% purity) | 100 g |
| Tartrazine | 100 g |
| Patent blue V | 30 g |
| Foliage fertilizer (Teknosan) | 1.8 g |
| Chelated Fe | 10 g |
| Chelated Zn | 5 g |
| Chelated Mn | 4 g |
| Chelated Cu | 1 g |
| $AgNO_3$ (3% aqueous solution) | 20 ml |

The foliage fertilizer used as nutrient substance and made by Teknosan AB, Sweden, had, according to the manufacturer's specification, the following composition: 22% N, 21% P, 17% K, 0.037% chelated Fe, 0.079% Mg, 0.040% Mn, 0.008% Cu, 0.002% Co, 0.003% B, 0.007% Zn and 0.005% Mo. Chelated substances of micro nutrient type would seem to be important, since, when forming part of the solution, they would seem to be directly absorbed by osmosis in the cell sap and are thus easily conveyed out into the different parts of the plant.

The preserved cherry laurel proved to be in an excellently preserved condition and displayed a high level of smoothness and flexibility in the foliage and an excellent color.

Example 10

Example 1 was repeated with a cypress (Chamaecyparis lawsoniana var. "Laney"). In this experiment, use was made of a preservative solution of the following composition:

| | |
|---|---|
| Distilled water | 8000 ml |
| Glycerin | 2000 ml |
| Magnesium sulphate | 12 g |
| Potassium nitrate | 10 g |

| | |
|---|---|
| $AgNO_3$ (3% aqueous solution) | 10 ml |
| Foliage fertilizer (Teknosan) | 6.0 ml |
| Tartrazine | 41 g |
| Patent blue V | 7.5 g |
| Chelated Fe | 12.5 g |
| Chelated Mn | 4 g |
| Chelated Zn | 5 g |
| pH | 6.2 |
| Conductivity | 1.75 S |

This example was made more difficult than normal in that, as specimens for preparation, were chosen plants which had stood out of the earth for three weeks. When such plants were prepared utilizing the conditions and the solution of Example 1, a reasonably good preparation was certainly obtained, but some branches displayed insufficiently prepared shoot tips. When plants from the same plant lot which had stood out of the earth for three weeks were prepared by means of the above-disclosed solution which contains chelated micro nutrient substances and whose pH and conductivity had been adapted to the plants in question, an excellent preparation was obtained as a result of the fact that the preparation solution was absorbed excellently and resulted in good plasticity in the branches and shoots of the finished plant specimen, right out into the shoot tips. The coloring was very even.

Example 11

Example 2 was repeated with a cypress (Chamaecyparis Lawsoniana var. Four Seasons) with the exception, however, that the above solution No. 3 was used and that 1.5 vol-% MIRANOL JEM CONC., an amphoteric sulfonated surface active agent, was added to the solution approximately 5 h after the immersion of the debarked trunk portion of the plant in the preservative solution. The amphoteric, sulfonated surface active agent MIRANOL JEM CONC. resulted in the obtention of a differentiated coloring, such that a lighter color was imparted to the younger shoots than to the older shoots. Otherwise, the result was the same, that is to say a very good coloring and a very good preparation with smooth, pliable and resilient branches and shoots.

**Claims**

1. A method for the preservation of living plants, in particular coniferous plants other than the Picea, Abies, Tsuga, Larix, Taxus and Cedrus genuses, in which process the plants, after severing of the root, are caused to suck-up, through a debarked trunk portion, a preservative liquid which is kept at a temperature of 15—33°C is based on glycerine and water in the approximate volume proportions of 18:82 to 35:65 and contains dyestuffs for replacing the color of the plant parts after the preservation, and preferably also one or more plant nutrient substances, in particular at least one water-soluble potassium salt, the preservation being carried out at a temperature of 15—33°C in a current of air at a relative humidity of at most 60%, and the plants being dried after the preservation, characterised in that the preservative liquid is caused to contain, apart from a blue and possibly also a red dyestuff, tartrazine (C.I. 19140, E102) in a concentration of at least 2 g/l preservative liquid.

2. The method as recited in claim 1, characterised in that the blue dyestuff comprises a triphenyl methane dyestuff, preferably patent blue V (C.I. 42501, E131).

3. The method as recited in claim 1 or 2, characterised in that the red dyestuff comprises new coccine (C.I. 16255, E124).

4. The method as recited in claim 1, 2 or 3, characterised in that the preservative liquid is caused to contain from 0.1 to 0.8 g/l of patent blue V (C.I. 42051, E131) and from 2 to 10 g/l of tartrazine (C.I. 19140, E102).

5. The method as recited in any one of claims 1—4, characterised in that the preservative liquid is caused to contain, as plant nutrient substance, potassium nitrate in a concentration of from 1 to 15 g/l.

6. The method as recited in any one of the preceding claims, characterised in that an amphoteric, sulphonated surface active agent, in particular a dicarboxylated imidazoline derivative with caprylic and ethylhexoic radicals is added to the preservative liquid in an amount of from 0.2 to 1.5 vol.%.

7. The method as recited in any one of the preceding claims, characterised in that the pH of the preservative liquid is adapted to the pH of the cell sap of the plants subjected to preservation, with a degree of accuracy of ± 0.5 pH units.

8. The method as recited in any one of the preceding claims, characterised in that the conductivity of the preservative liquid is adapted to the conductivity of the cell sap of the plants subjected to preservation.

9. A preservation liquid for carrying out the method as recited in any one of the preceding claims based on glycerine and water in the approximate volume proportions of 18:82 to 35:65 and containing dyestuffs for replacing the color of the plant parts after the preservation and possibly also at least one plant nutrient substance, in particular at least one water-soluble potassium salt, characterised in that the preservative liquid, apart from a blue and possibly also a red dyestuff, comprises tartrazine (C.I. 19140, E102) in a concentration of at least 2 g/l.

10. The preservative liquid as recited in claim 9, characterised in that the blue dyestuff is a triphenyl methane dyestuff, preferably patent blue V (C.I. 42051, E131).

11. The preservative liquid as recited in claim 9 or 10, characterised in that the red dyestuff is new coccine (C.I. 16255, E124).

12. The preservative liquid as recited in claim 9, 10 or 11, characterised in that it contains from 2—10 g/l of tartrazine and from 0.1 to 0.8 g/l of patent blue V.

13. The preservative liquid as recited in any one of claims 9—12, characterised in that it contains, as plant nutrient substance, potassium nitrate in a content of from 1 to 15 g/l.

**Revendications**

1. Procédé de naturalisation de plantes vivantes, et en particulier de conifères autres que les espèces Picea, Abies, Tsuga, Larix, Taxus et Cedrus, les plantes, après avoir été coupées à leur racine, étant amenées à aspirer par une partie dépourvue d'écorce de leur tige, un liquide de naturalisation maintenu à une température comprise entre 15 et 33°C, basé sur de la glycérine et de l'eau dans des proportions approximatives en volume comprises entre 18:82 et 35:65, et contenant des colorants pour remplacer la couleur des parties de la plante après la naturalisation, et de préférence aussi une ou plusieurs substances nutritives des plantes, en particulier au moins un sel de potassium soluble dans l'eau, la naturalisation étant réalisée à une température comprise entre 15 et 33°C dans un courant d'air avec un taux d'humidité relative d'au maximum 60%, les plantes étant séchées après la naturalisation, caractérisé en ce que ledit liquide de naturalisation contient, en dehors d'un colorant bleu et éventuellement aussi d'un colorant rouge, de la tartrazine (C.I. 19140, E102) sous une concentration d'au moins 2 g/l du liquide de naturalisation.

2. Procédé selon la revendication 1, caractérisé en ce que le colorant bleu comprend un colorant de triphénylméthane et de préférence du bleu "patent bleu V" (C.I. 42501, E131).

3. Procédé selon l'une quelconque des revendications 1 et 2, caractérisé en ce que le colorant rouge comprend de la coccine nouvelle (C.I. 16255, E124).

4. Procédé selon l'une quelconque des revendications 1, 2 et 3, caractérisé en ce que le liquide de naturalisation contient de 0,1 à 0,8 g/l de bleu "patent blue V" (C.I. 42051, E131) et de 2 à 10 g/l de tartrazine (C.I. 19140, E102).

5. Procédé selon l'une quelconque des revendications 1 à 4, caractérisé en ce que le liquide de naturalisation contient, en tant que substance nutritives des plantes, du nitrate de potassium selon une concentration comprise entre 1 et 15 g/l.

6. Procédé selon l'une quelconque des revendications précédentes, caractérisé en ce qu'un agent tensioactif sulphoné amphotère, en particulier un dérivé imidazoline dicarboxylé avec des radicaux capryliques et éthylhexoïques, est ajouté au liquide de naturalisation dans une quantité comprise entre 0,2 et 1,5% en volume.

7. Procédé selon l'une quelconque des revendications précédentes, caractérisé en ce que le pH du liquide de naturalisation est ajusté au pH du suc cellulaire des plantes soumises à la naturalisation, avec un degré de précision de $\pm$ 0.5 unité pH.

8. Procédé selon l'une quelconque des revendications précédentes, caractérisé en ce que la conductivité du liquide de naturalisation est ajustée à la conductivité du suc cellulaire des plantes soumises à la naturalisation.

9. Liquide de naturalisation destiné à mettre en oeuvre le procédé selon l'une quelconque des revendications précédentes, basé sur de la glycérine et de l'eau selon des proportions approximatives en volume comprises entre 18:82 et 35:65 et contenant des colorants pour remplacer la couleur des parties de la plante après la naturalisation et éventuellement aussi au moins une substance nutritive des plantes, en particulier au moins un sel de potassium soluble dans l'eau, caractérisé en ce que le liquide de naturalisation comprend, en dehors d'un colorant bleu et éventuellement aussi d'un colorant rouge, de la tartrazine (C.I. 19140, E102) selon une concentration d'au moins 2 g/l.

10. Liquide de naturalisation selon la revendication 9, caractérisé en ce que ledit colorant bleu est un colorant de triphénylméthane et de préférence du bleu "patent blue V" (C.I. 42051, E131).

11. Liquide de naturalisation selon l'une quelconque des revendications 9 et 10, caractérisé en ce que ledit colorant rouge est de la coccine nouvelle (C.I. 16255, E124).

12. Liquide de naturalisation selon l'une quelconque des revendications 9, 10 et 11, caractérisé en ce qu'il contient de 2 à 10 g/l de tartrazine et de 0,1 à 0,8 g/l de bleu "patent blue V".

13. Liquide de naturalisation selon l'une quelconque des revendications 9 à 12, caractérisé en ce qu'il contient, en tant que substance nutritive des plantes, du nitrate de potassium dans une quantité comprise entre 1 et 15 g/l.

## Patentansprüche

1. Verfahren zum Konservieren von lebendigen Pflanzen, insbesondere anderen Koniferen als die Picea-, Abies-, Tsuga-, Larix-, Taxus- und Cedrus-Gattungen, in welchem man die Pflanzen nach Abscheiden der Wurzel durch einen entrindeten Stammteil eine Konservierungsflüssigkeit, die bei einer Temperatur von 15—33°C gehalten wird, auf Glyzerin und Wasser in den ungefähren Volumenverhältnissen von 18:82 bis 35:65 basiert ist und Farbstoffe zum Ersetzen der Farbe der Pflanzenteile nach der Konservierung enthält, und vorzugsweise auch eine oder mehrere Pflanzennährmittel, insbesondere zumindest ein wasserlösliches Kaliumsalz, aufsaugen lässt, wobei die Konservierung bei einer Temperatur von 15—33°C in einem Luftstrom bei einer relativen Feuchtigkeit von höchstens 60% durchgeführt wird und die Pflanzen nach der Konservierung getrocknet werden, dadurch gekennzeichnet, dass die Konservierungsflüssigkeit ausser einem blauen und gegebenenfalls auch einem roten Farbstoff Tartrazin (C.I. 19140, E102) in einer Konzentration von zumindest 23 g/l Konservierungsflüssigkeit enthält.

2. Verfahren nach Anspruch 1, dadurch gekennzeichnet, dass der blaue Farbstoff einen Triphenylmethan-Farbstoff, vorzugsweise Patentblau V (C.I. 42501, E131) umfasst.

3. Verfahren nach Anspruch 1 oder 2, dadurch gekennzeichnet, dass der rote Farbstoff New Coccine (C.I. 16255, E124) umfasst.

4. Verfahren nach Anspruch 1, 2 oder 3, dadurch gekennzeichnet, dass die Konservierungsflüssigkeit von 0,1 bis 0,8 g/l Patentblau V (C.I. 42501, E 131) und von 2 bis 10 g/l Tartrazin (C.I. 19140, E102) enthält.

5. Verfahren nach einem der Ansprüche 1—4, dadurch gekennzeichnet, dass die Konservierungsflüssigkeit als Pflanzennährmittel Kaliumnitrat in einer Konzentration von 1 bis 15 g/l enthält.

6. Verfahren nach einem der vorhergehenden Ansprüche, dadurch gekennzeichnet, dass ein amphoterer, sulfonierter grenzflächenaktiver Stoff, insbesondere ein dicarboxyliertes Imidazolinderivat mit Kapryl- und Äthylhexansäureradikalen, der Konservierungsflüssigkeit in einer Menge von 0,2 bis 1,5 Vol.-% hinzugesetzt wird.

7. Verfahren nach einem der vorhergehenden Ansprüche, dadurch gekennzeichnet, dass der pH-Wert der Konservierungsflüssigkeit dem pH-Wert des Zellsaftes der der Konservierung unterworfenen Pflanzen, mit einem Genauigkeitsgrad von ± 0,5 pH-Einheiten, angepasst wird.

8. Verfahren nach einem der vorhergehenden Ansprüche, dadurch gekennzeichnet, dass die Leitfähigkeit der Konservierungsflüssigkeit der Leitfähigkeit des Zellsaftes der der Konservierung unterworfenen Pflanzen angepasst wird.

9. Konservierungsflüssigkeit zum Durchführen des Verfahrens nach einem der vorhergehenden Ansprüche, welche auf Glyzerin und Wasser in den ungefähren Volumenverhältnissen von 18:82 bis 35:65 basiert ist und Farbstoffe zum Ersetzen der Farbe der Pflanzenteile nach der Konservierung und gegebenenfalls auch zumindest ein Pflanzennährmittel, insbesondere zumindest ein wasserlösliches Kaliumsalz, enthält, dadurch gekennzeichnet, dass die Konservierungsflüssigkeit ausser einem blauen und gegebenenfalls auch einem roten Farbstoff Tartrazin (C.I. 19140, E102) in einer Konzentration von zumindest 2 g/l enthält.

10. Konservierungsflüssigkeit nach Anspruch 9, dadurch gekennzeichnet, dass der blaue Farbstoff ein Triphenylmethan-Farbstoff, vorzugsweise Patentblau V (C.I. 42501, E131) ist.

11. Konservierungsflüssigkeit nach Anspruch 9 oder 10, dadurch gekennzeichnet, dass der rote Farbstoff New Coccine (C.I. 16255, E124) ist.

12. Konservierungsflüssigkeit nach Anspruch 9, 10 oder 11, dadurch gekennzeichnet, dass sie von 2 bis 10 g/l Tartrazin und von 0,1 bis 0,8 g/l Patentblau V enthält.

13. Konservierungsflüssigkeit nach einem der Ansprüche 9—12, dadurch gekennzeichnet, dass sie als Pflanzennährmittel Kaliumnitrat in einem Gehalt von 1 bis 15 g/l enthält.